Europäisches Patentamt

European Patent Office

Office européen des brevets

(19)

(11) Numéro de publication: **0 251 855 B1**

(12) **FASCICULE DE BREVET EUROPEEN**

(45) Date de publication de fascicule du brevet:
21.08.91

(51) Int. Cl.⁵: **G01S 7/295**

(21) Numéro de dépôt: 87401346.9

(22) Date de dépôt: 16.06.87

Le dossier contient des informations techniques
présentées postérieurement au dépôt de la
demande et ne figurant pas dans le présent
fascicule.

(54) **Procédé et dispositif de correction de l'obliquité de la mesure de distance d'un radar à courte portée.**

(30) Priorité: 17.06.86 FR 8608719

(43) Date de publication de la demande:
07.01.88 Bulletin 88/01

(45) Mention de la délivrance du brevet:
21.08.91 Bulletin 91/34

(84) Etats contractants désignés:
DE GB IT NL SE

(56) Documents cités:
EP-A- 0 067 316
DE-A- 2 425 708
GB-A- 1 558 469
GB-A- 1 564 169
US-A- 2 624 509

PATENT ABSTRACTS OF JAPAN, vol. 8, no.
159 (P-289)[1596], 24 juillet 1984; & JP-A-59
57 180

IBM TECHNICAL DISCLOSURE BULLETIN, vol.
7, no. 6, novembre 1964, pages 488,489, New
York, US; P.E. ANUTA et al.: "Time base function generator".

(73) Titulaire: THOMSON-CSF
51, Esplanade du Général de Gaulle
F-92800 Puteaux(FR)

(72) Inventeur: Andrieu, Jean-Pierre
THOMSON-CSF SCPI-19, avenue de Messine
F-75008 Paris(FR)
Inventeur: Gault, Dominique
THOMSON-CSF SCPI-19, avenue de Messine
F-75008 Paris(FR)
Inventeur: Henri, Jean-Claude
THOMSON-CSF SCPI-19, avenue de Messine
F-75008 Paris(FR)

(74) Mandataire: Benoit, Monique et al
THOMSON-CSF SCPI
F-92045 PARIS LA DEFENSE CEDEX 67(FR)

## Description

La présente invention a pour objet un procédé et un dispositif de correction de l'obliquité de la mesure de distance réalisée par un radar à courte portée, correction également connue sous le nom anglais de "Slant Range Correction".

Ainsi qu'il est connu, un radar émet périodiquement des impulsions qui se réfléchissent sur les obstacles environnants et retournent vers l'émetteur radar. En réception, le radar reçoit un signal appelé signal vidéo, constitué d'une succession de signaux de même durée appelés récurrences, chaque récurrence étant constituée par l'ensemble des échos reçus en réponse à une impulsion émise ; le signal vidéo est, après traitement, visualisé sur un écran. La distance (D) d'un mobile par rapport au centre radar est proportionnelle au temps (t) de l'aller et retour de cette impulsion :

$$D = \frac{c \cdot t}{2} \, ,$$

avec c, vitesse des ondes électromagnétiques. En général, le signal vidéo est échantillonné et numérisé. La distance D est alors donnée par :

$$D = E \cdot \frac{c \cdot Te}{2} \qquad (1)$$

où E est le nombre d'échantillons depuis le début de la récurrence, ou encore le numéro de cet échantillon si ceux-ci sont numérotés séquentiellement à partir du début de la récurrence, et Te la période d'échantillonnage.

Certains radars sont utilisés pour contrôler le trafic aérien au niveau d'un aéroport (notamment le trafic des avions au sol) ou encore le trafic portuaire, c'est-à-dire dans des zones proches du centre radar. Dans ce type d'application, il est nécessaire de surélever le radar afin que sa surveillance ne soit pas gênée par des obstacles terrestres : il est alors placé sur une tour, dont la hauteur peut être de l'ordre de cent mètres. Les mesures de distance réalisées par le radar sont faites évidemment par rapport au centre radar or seules les projections au sol de ces distances sont utiles : il est donc nécessaire de corriger les distances mesurées pour les exprimer par rapport au pied de la tour ; si cela n'est pas fait, il en résulte une erreur de positionnement des échos, qui est au maximum égale à la hauteur de la tour. De plus, les échos radar sont visualisés sur un écran sur lequel on superpose en général une carte des infrastructures au sol (pistes d'atterrissage, pistes de roulement, etc..). Il résulte alors de l'erreur de positionnement précédente une non coïncidence entre la vidéo radar et la carte, qui est tout à fait préjudiciable à une bonne surveillance de la zone considérée.

Diverses solutions sont utilisables pour éviter cette non coïncidence.

Parmi celles-ci, il est connu de relever spécialement une carte des infrastructures au sol par rapport au centre radar, en utilisant par exemple un réflecteur sur un véhicule qui parcourt les différentes pistes de l'aéroport. Cette méthode est lourde à mettre en oeuvre : les cartes doivent être faites spécialement et les relevés cartographiques classiques sont inutilisables. En outre, cette solution ne permet que de superposer correctement la carte avec la vidéo radar, et toute information supplémentaire affichée sur l'écran, comme par exemple une indication d'échelle, est également à corriger.

Une autre solution consiste à effectuer la correction sur la notion même de la distance associée à un échantillon donné, c'est-à-dire à ne plus considérer qu'un échantillon représente un incrément de distance élémentaire constant mais à lui associer une information distance qui doit être calculée en fonction du numéro de cet échantillon (donc de la position relative de l'obstacle par rapport au centre radar). Cette solution est assez lourde à mettre en oeuvre et présente l'inconvénient d'être inutilisable sur les équipements existants sans modification matérielle de ceux-ci.

Le brevet britannique GB-A-1.558.469 décrit un dispositif de traitement de signal permettant de corriger les mesures de distances obliques faites par un radar aéroporté. Il consiste à échantillonner la vidéo radar, à mémoriser tous les échantillons d'une récurrence, à inhiber l'affichage des échantillons correspondant à la hauteur du radar puis à relire les échantillons restants à une vitesse variable.

La présente invention permet d'opérer une correction pour visualiser une distance réelle, ce qui permet d'être compatible avec les relevés cartographiques existants, tout en restant simple et compatible avec les traitements amonts et avals existants.

Elle consiste à recréer, à partir d'une récurrence radar incidente, une récurrence corrigée ayant les mêmes caractéristiques (notamment fréquence d'échantillonnage, portée, durée, nombre d'échantillons) mais dont les échantillons sont repositionnés temporellement de façon à réaliser une correction de distance. Une telle structure présente l'avantage d'être parfaitement transparente vis-à-vis des dispositifs amont (récepteur radar par exemple) et aval (traitement du signal radar, transformateur numérique d'images, visualisation, par exemple).

Plus précisément, l'invention a pour objet un procédé de correction tel que décrit par la revendication 1, ainsi qu'un dispositif de mise en oeuvre tel que décrit par la revendication 6.

Cette structure a donc un caractère optionnel, ce qui constitue un avantage supplémentaire.

D'autres objets, particularités et résultats de l'invention ressortiront de la description suivante, donnée à titre d'exemple non limitatif et illustrée par les figures annexées, qui représentent :

- la figure 1, un schéma illustrant l'erreur introduite dans la mesure des distances par le fait que le radar est disposé sur une tour ;
- la figure 2, une courbe explicative ;
- les figures 3a à 3d, des diagrammes temporels illustrant le procédé de correction selon l'invention ;
- la figure 4, le schéma synoptique d'un premier mode de réalisation du dispositif selon l'invention ;
- la figure 5, le schéma synoptique d'un deuxième mode de réalisation du dispositif selon l'invention ;
- la figure 6, le schéma d'un élément utilisé dans le dispositif selon l'invention ;
- les figures 7a à 7e, des diagrammes de signaux relatifs à la figure 6 ;
- la figure 8, le schéma d'un autre élément utilisé dans le dispositif selon l'invention ;
- les figures 9a et 9b, des diagrammes de signaux relatifs à la figure 8.

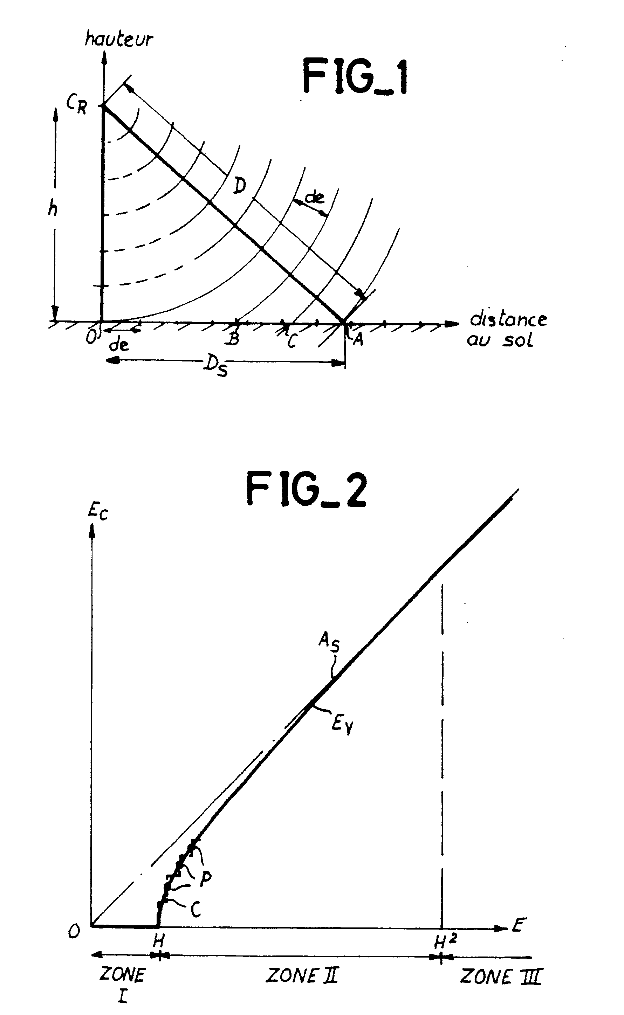

La figure 1 illustre donc l'erreur introduite dans la mesure des distances par le fait que le radar est placé sur une tour.

Sur cette figure, le centre radar, repéré $C_R$, est placé sur une tour de hauteur h. Soit A un mobile au sol dont le radar doit mesurer la distance $D_S$ par rapport au pied (O) de la tour, choisi comme origine des coordonnées.

En fait, le radar mesure la distance oblique D séparant les points $C_R$ et A.

Ainsi qu'il a été dit ci-dessus, le signal vidéo reçu par le radar est échantillonné et chaque échantillon correspond à un incrément de distance, ou distance élémentaire, noté $d_e$ ; on a illustré, sur la figure 1, les E distances élémentaires $d_e$ formant la distance D par E cercles concentriques (centre $C_R$).

On a donc :

$$D = E \cdot d_e \quad (2)$$

avec :

$$d_e = \frac{c \cdot T_e}{2} \quad (3)$$

ce qui est équivalent à l'expression (1) ci-dessus. On peut également exprimer la hauteur h de la tour en fonction de

$$d_e : h = H \cdot d_e \quad (4)$$

H étant un nombre de distances élémentaires $d_e$. La distance au sol $D_S$ peut s'écrire :

$$D_S = \sqrt{D^2 - h^2}$$

ou, en relation avec les expressions (2) et (4) :

$$D_S = d_e \cdot \sqrt{E^2 - H^2}$$

Selon l'invention, on prend comme distance au sol du mobile A une quantité $D_{sol}$ qui est un nombre entier ($E_c$) de distances élémentaires $d_e$, $E_c$ étant tel que $D_{sol}$ soit la meilleure approximation possible de $D_S$. Cela peut s'écrire :

$$E_c = q \left( \sqrt{E^2 - H^2} \right) \quad (5)$$

où q(u) est une loi de quantification définie par :

$$\forall u \in ] \, n-0,5 \, ; \, n+0,5 \, ] ; \quad q(u) = n,$$

n étant un nombre entier positif.

D'autres lois sont bien entendu envisageables, comme celle où l'intervalle

]n-0,5 ; n + 0,5]

est remplacé par

]n ; n + 1].

La figure 2 représente la courbe de la variation du nombre corrigé d'échantillons ($E_c$) en fonction du nombre non corrigé (E), telle que donnée par l'expression (5) ci-dessus.

On a représenté sur cette figure l'enveloppe $E_v$ de cette courbe, son asymptote $A_S$ ($E_c = E$) et une partie de la courbe C correspondant à l'expression (5), qui est en réalité une succession de points p.

Cette courbe présente trois zones.

Dans la première zone (zone I), où E est inférieur à H, la distance des éventuels échos au centre radar est inférieure à la hauteur de la tour : il ne peut donc s'agir d'échos provenant de mobiles au sol et ils ne sont pas pris en compte.

Dans la deuxième zone (zone II), où E est compris entre H et $H^2$, les échantillons corrigés $E_c$ sont obtenus par multiplication des échantillons E par un facteur $P_E$. Le facteur $P_E$ est variable et fonction de E. Il est à noter que le nombre d'échantillons créés par multiplication dans cette zone est égal au nombre (H) de points non pris en compte dans la zone précédente.

Dans la troisième zone (zone III), où E est supérieur à $H^2$, on considère que la courbe peut être confondue avec son asymptote et on a donc $E_c = E$ : il n'y a pas de correction. En effet, la correction nécessaire n'est importante qu'à proximité du centre radar $C_R$ et, à une certaine distance de celui-ci (choisie ici égale à $E = H^2$), elle peut être négligée.

Il apparaît ainsi que le débit moyen d'informations en entrée est égal au débit moyen d'informations en sortie.

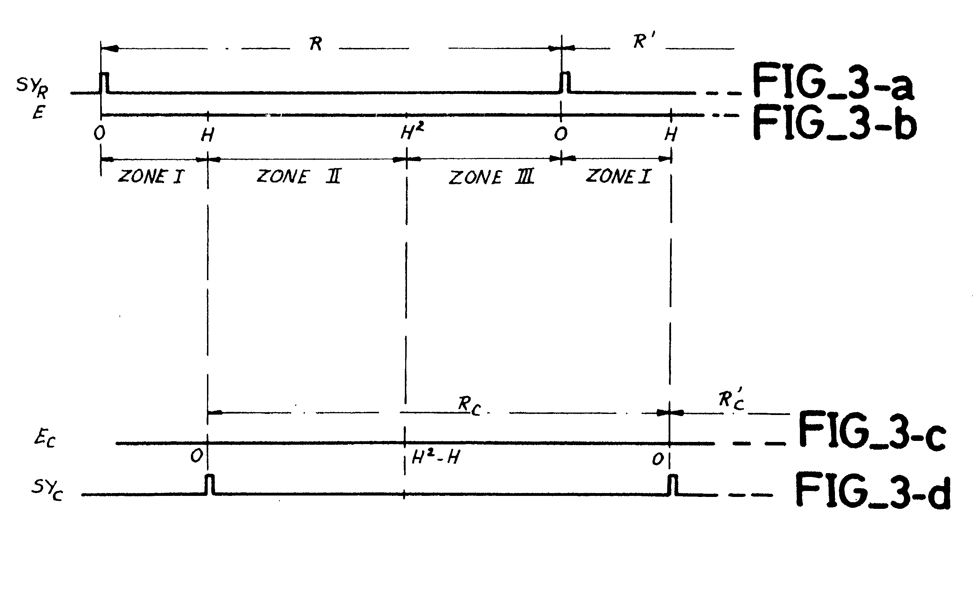

Il apparaît toutefois un décalage qui est illustré sur les figures 3, a à d.

Sur le diagramme 3a, on a représenté le signal de synchronisation radar $SY_R$ qui est constitué par une succession périodique d'impulsions, définissant les récurrences successives (R, R').

Le diagramme 3b représente les valeurs remarquables 0, H, $H^2$ des échantillons E en fonction du temps, qui définissent les zones I, II et III.

Le diagramme 3c représente les échantillons corrigés $E_c$ en fonction du temps : ils commencent (valeur 0) en début de zone I et peuvent se poursuivre au delà de la récurrence R, jusqu'à la fin de la zone I de la récurrence suivante R'.

Le diagramme 3d illustre la correction qu'il faut alors faire subir au signal de synchronisation radar $SY_R$, qui devient $SY_c$ : l'impulsion de début de récurrence corrigée (notées $R_c$, $R'_c$) intervient en début de zone II mais la durée de la récurrence étant conservée, elle se termine au début de la zone II de la récurrence radar suivante (R').

Il apparaît donc que selon ce procédé on recrée, à partir d'une récurrence radar incidente, une récurrence corrigée ayant la même durée et le même nombre d'échantillons, mais dont les échantillons sont repositionnés temporellement afin de réaliser la correction de distance recherchée.

Il est toutefois à noter que le retard introduit entre $SY_R$ et $SY_c$ doit être également introduit sur les signaux de rotation d'antenne (signal de passage au nord, signal d'incrément d'angle), afin de conserver la transparence de la correction effectuée au niveau de l'affectation des récurrences aux radiales.

Il est également à noter que la multiplication des échantillons en zone II est nécessaire pour des raisons d'aspect de l'image visualisée : en effet, un échantillon E représente une distance élémentaire au sol (par exemple segment BC sur la figure 1) qui est supérieure à $d_e$ ; si on opérait seulement un re-positionnement des échantillons E sans multiplication, l'image obtenue aurait un aspect "mité".

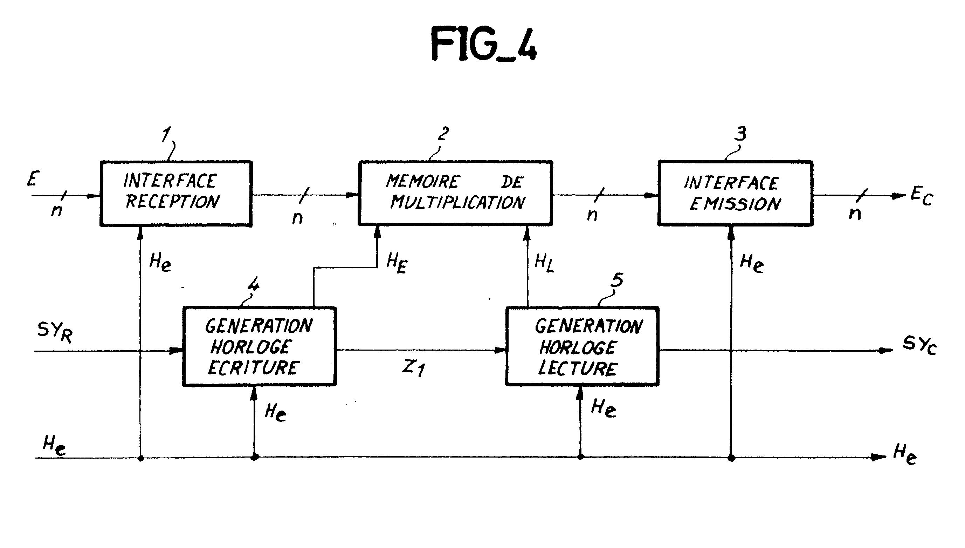

La figure 4 décrit un mode de réalisation d'un dispositif pour la mise en oeuvre du procédé précédent.

Ce dispositif comporte principalement une interface de réception 1, un ensemble 2 assurant la multiplication des échantillons, réalisée dans cet exemple par une mémoire, une interface d'émission 3, un générateur 4 d'un signal d'horloge d'entrée dans l'ensemble 2 et un générateur 5 d'un signal d'horloge de sortie de ces mêmes moyens 2.

L'interface de réception 1 reçoit les échantillons E de la vidéo radar incidente, par exemple en parallèle sur n bits, et assure leur mise en forme sous le contrôle de la fréquence d'échantillonnage He afin de la rendre acceptable par l'ensemble 2.

Dans ce mode de réalisation, la multiplication par un facteur $P_E$ de certains échantillons est réalisée en mémorisant les échantillons incidents et en les lisant ultérieurement le nombre ($P_E$) de fois désiré. Etant donné que l'on souhaite avoir le même rythme (He) pour les échantillons E à l'entrée que pour les échantillons corrigés $E_c$ à la sortie du dispositif, selon l'invention on mémorise les échantillons au fur et à mesure de leur arrivée et on les lit à un rythme inférieur, correspondant au facteur de multiplication $P_E$ recherché ; ces échantillons lus à un rythme plus lent sont ensuite réémis chacun plusieurs fois au rythme He. La mémorisation doit donc être réalisée par un dispositif permettant l'écriture et la lecture simultanément et indépendamment l'une de l'autre. Une mémoire du type FIFO convient à cet effet.

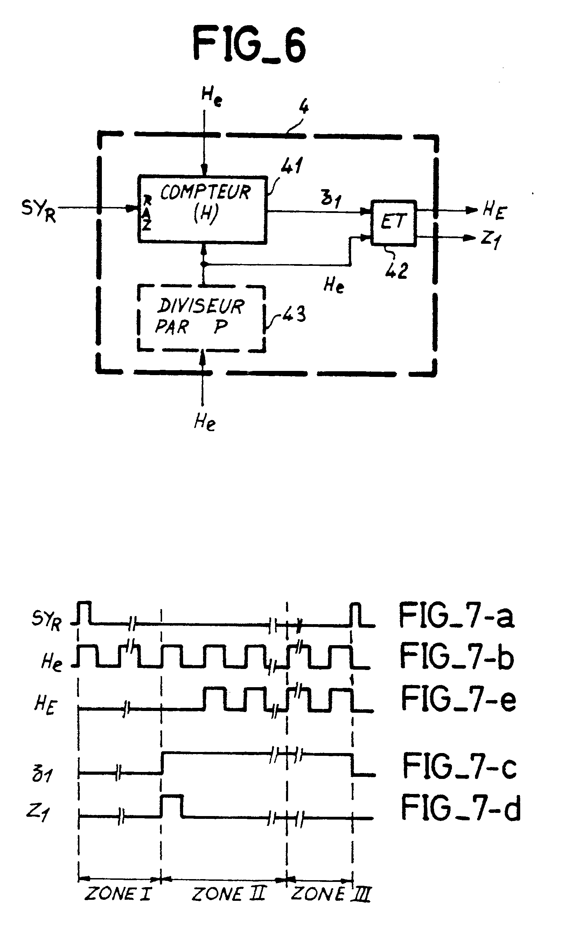

Les échantillons incidents sont donc inscrits au rythme de leur arrivée dans la mémoire 2, sauf les échantillons correspondants à la zone I. A cet effet, l'écriture en mémoire 2 est commandée par un signal d'horloge $H_E$, engendré par l'ensemble 4 ; cet ensemble 4 est décrit ci-après, figure 6.

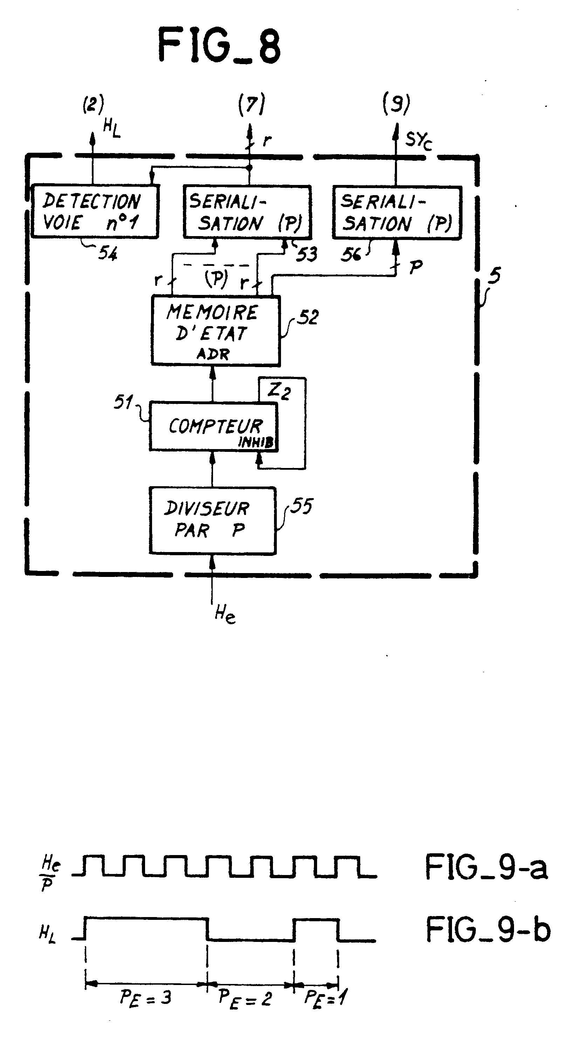

Ces échantillons sont relus à un rythme plus lent, noté $H_L$, fourni par l'ensemble 5 dont un mode de réalisation est donné figure 8. L'ensemble 5 engendre en outre le signal de synchronisation corrigé $SY_c$.

Les échantillons lus au rythme $H_L$ sont transmis, par exemple également en parallèle sur n bits, à l'interface d'émission 3 qui en assure la mise en forme et l'émission au rythme He, identique au rythme des échantillons incidents E. A cet effet, il mémorise les échantillons au fur et à mesure de leur réception (au rythme $H_L$), à l'aide de bascules de type D par exemple, et émet cette information mémorisée au rythme He. De la sorte, lorsque la fréquence $H_L$ est inférieure à la fréquence He, le même échantillon est émis plusieurs fois ($P_E$ fois), c'est-à-dire multiplié par $P_E$.

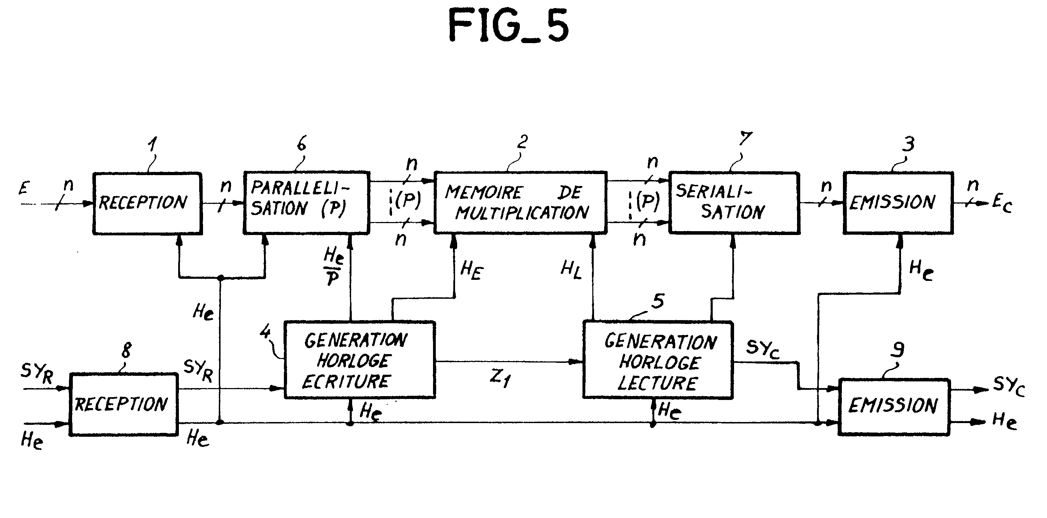

La figure 5 représente un autre mode de réalisation du dispositif selon l'invention, permettant d'utiliser, pour réaliser la mémoire 2, des mémoires dont la fréquence du fonctionnement est moins élevée. A cet effet, le dispositif de la figure 4 est, sur la figure 5, parallélisé par un facteur P au niveau de la mémoire 2.

Plus précisément, le dispositif de la figure 5 comporte des éléments analogues à ceux de la figure 4, auxquels on a ajouté entre les blocs 1 et 2 un circuit 6, assurant la mise en parallèle des échantillons incidents E par un facteur P, recevant à cet effet le signal d'horloge He ainsi qu'un signal He/P, et corrélativement un ensemble multiplexeur 7 assurant une sérialisation des échantillons reçus en parallèle sur P voies de la mémoire 2, sous la commande de l'ensemble 5.

A titre d'exemple, la mise en parallèle par un facteur P est réalisée à l'aide de P voies recevant les échantillons E en parallèle, la voie d'ordre i (i variant de 1 à P) comportant i-1 bascules de type D en série. Ce mode de réalisation est bien adapté à la parallélisation par deux (P = 2). Lorsque P devient plus grand, il est plus simple de recourir par exemple à un registre à décalage.

On a représenté en outre deux ensembles 8 et 9 assurant respectivement la réception et l'émission des signaux d'horloge $(H_e)$ et de synchronisation radar $(SY_R$ et $SY_c)$, de façon analogue aux ensembles 1 et 3 pour les échantillons E et $E_c$.

La figure 6 représente un mode de réalisation de l'ensemble 4 de génération d'un signal d'horloge d'écriture $H_E$. Cette figure est décrite ci-dessous en liaison avec les figures 7,a à e, qui montrent l'évolution dans le temps de différents signaux reçus ou émis par l'ensemble 4.

L'ensemble 4 comporte un compteur 41 recevant le signal He d'échantillonnage, qui est représenté sur le diagramme 7b ; le compteur 41 a pour fonction de compter jusqu'à la valeur H qui est, on le rappelle, le nombre d'échantillons correspondants à la hauteur à laquelle est placé le centre radar. Le signal de sortie $z_1$ du compteur 41, illustré sur le diagramme 7c, est donc nul pendant toute la durée de la zone I puis au niveau haut pendant les deux autres zones.

L'ensemble 4 comporte encore un circuit logique 42 assurant principalement une fonction du type ET, qui reçoit le signal $z_1$ et le signal d'horloge He et qui délivre le signal d'horloge écriture $H_E$ illustré par le diagramme 7e : ce signal est donc identique au signal He sauf dans la zone I (plus une période dans ce mode de réalisation) où il est nul. De la sorte, l'écriture dans la mémoire 2 est inhibée dans la zone I. Le circuit 42 produit en outre une impulsion, notée $Z_1$, par détection du front de montée du signal $z_1$, représentée sur le diagramme 7d.

En outre, le compteur 41 est remis à zéro par l'impulsion de synchronisation radar $SY_R$, illustrée sur le diagramme 7a, afin de permettre le traitement de la récurrence suivante.

Enfin, on a représenté en pointillé en 43 un diviseur par P, interposé entre la réception du signal d'échantillonnage He et l'entrée du compteur 41, utilisé dans le cas de la figure 5 pour tenir compte du parallélisme (P) réalisé au niveau de l'ensemble 1. Dans ce cas, le signal reçu par la porte ET 42 n'est pas le signal He mais le signal de sortie du diviseur 43. Il est à noter que dans le cas de la figure 5, les ensembles 4 et 5 ayant tous deux besoin du signal He/P, la division peut être faite une seule fois, en amont de ces ensembles.

La figure 8 représente un mode de réalisation de l'ensemble 5 de génération du signal d'horloge de lecture $H_L$ de la mémoire 2, à titre d'exemple dans le cas particulier de la figure 5. Cette figure est décrite ci-dessous en liaison avec les figures 9a et 9b qui montrent l'évolution dans le temps de différents signaux reçus ou engendrés par l'ensemble 5.

L'ensemble 5 a donc pour fonction d'engendrer le signal de lecture $(H_L)$ de la mémoire 2 et doit donc pour cela contenir les valeurs du facteur $(P_E)$ par lequel on doit multiplier les échantillons. Ces valeurs sont contenues dans une mémoire (52) dite mémoire d'état.

La vitesse de cette mémoire d'état peut être plus faible que celle qui serait requise par le rythme (He) des échantillons. Il est donc possible de réaliser une parallélisation à ce niveau par un facteur Q, comme on a décrit ci-dessus (figure 5) une parallélisation au niveau de la mémoire 2, par un facteur P. En pratique, il s'avère très commode de prendre Q = P : c'est le mode de réalisation qui est décrit figure 8.

L'ensemble 5 reçoit donc le signal d'horloge He. Cette fréquence He est divisée par le degré de parallélisme P par un diviseur 55 ; la fréquence He/P est illustrée sur le diagramme 9a. Elle est ensuite fournie à un compteur 51 ayant pour fonction d'adresser successivement les mots de la mémoire d'état 52, au rythme de l'horloge d'échantillonnage divisé par P. Cette mémoire contient des mots de P x r bits, avec $2^r$ = P. A la fin de la zone II, le compteur 51 émet un signal $Z_2$ de fin de comptage qui lui est appliqué sur une entrée d'inhibition (INHIB) ; cela a pour effet d'adresser en permanence le dernier mot de la mémoire 52 qui correspond à l'ensemble de la zone III, à savoir :

$$H_L = He/P.$$

Les bits à destination de l'ensemble 7 sont sérialisés sur r bits par l'intermédiaire d'un multiplexeur 53 , sélectionnant ainsi séquentiellement l'une des P voies disponibles en sortie de la mémoire 2. Le signal d'horloge de lecture $H_L$ est engendré par le dispositif 54 de détection de la sélection de la voie N°1 parmi les P voies disponibles en sortie de mémoire 2.

Par ailleurs, il est commode d'ajouter à chacun des mots de la mémoire d'état (P x r bits) un mot de P x 1 bit donnant les P états successifs du signal de synchronisation radar corrigé $SY_c$. Ce mot, lu en même temps que les numéros de voies, est sérialisé par un multiplexeur 56 pour former le signal $SY_c$ à destination de l'ensemble 9.

Dans le cas particulier où P = 2, on a r = 1 et il est commode d'associer par exemple l'état haut de la sortie de la mémoire d'état à la sélection des échantillons de l'une des voies (voie N° 1 par exemple) et l'état bas à celle des échantillons de l'autre voie (voie N° 2). C'est ainsi que la figure 9b illustre un exemple du signal $H_L$ en fonction du temps. Dans cet exemple, le premier échantillon de la voie N° 1 est répété trois fois (facteur $P_E$ = 3), l'échantillon de la voie N° 2 suivant n'est, lui, multiplié que deux fois. Pour le couple d'échantillons suivant, toujours à titre d'exemple, le premier échantillon n'est multiplié qu'une fois, etc... En d'autres termes, le signal $H_L$ constitue directement le codage de la voie N° 1 : quand il est au niveau haut, il s'agit de la voie N° 1. Dans ce cas, le dispositif de détection 54 n'est pas utile.

Bien entendu, l'invention n'est pas limitée à l'exemple décrit et entre notamment dans le cadre de l'invention une correction consistant à obtenir la projection de la distance mesurée par le radar sur un plan autre que le plan horizontal, passant par le mobile détecté.

## Revendications

1. Procédé de correction de l'obliquité de la mesure de distance réalisée par un radar, le radar fournissant une mesure dite oblique de la distance (D) séparant son centre ($C_R$) d'un mobile (A) et la correction consistant à obtenir la projection ($D_S$) de cette distance sur un plan passant par le mobile le radar fournissant un signal vidéo échantillonné à fréquence constante (He), les échantillons incidents (E) ainsi obtenus formant une suite de récurrences (R, R') dites récurrences radar incidentes, une récurrence corrigée (Rc, Rc') étant obtenue à partir de chaque récurrence radar incidente, le procédé étant caractérisé par le fait que ladite récurrence corrigée ($R_c \cdot R_{c'}$) est obtenue par :
   - suppression de tous les échantillons incidents situés dans une première zone (I) de la récurrence radar s'étendant sensiblement de zéro à H échantillons, où H est la hauteur du radar par rapport au plan, exprimée en échantillons ;
   - repositionnement temporel des premiers échantillons incidents situés après la première zone par création de nouveaux échantillons en nombre égal aux échantillons incidents supprimés, la fréquence des échantillons corrigés (He) la durée de la récurrence corrigée et le nombre d'échantillons corrigés dans une récurrence corrigée, étant identiques à ceux de la récurrence radar incidente.

2. Procédé selon la revendication 1 caractérisé par le fait que le repositionnement temporel pour création de nouveaux échantillons s'effectue pour les échantillons incidents situés dans une deuxième zone (II) de la récurrence radar, s'étendant sensiblement de H à $H^2$ échantillons, les échantillons incidents situés dans une troisième zone (III) de la récurrence radar, s'étendant sensiblement de $H^2$ échantillons à la fin de la récurrence, étant positionnés séquentiellement et à la fréquence d'échantillonnage (He).

3. Procédé selon la revendication 2, caractérisé par le fait que la récurrence corrigée est retardée par rapport à la récurrence radar incidente d'une durée égale à celle de la première zone.

4. Procédé selon la revendication 3, caractérisé par le fait que le radar fournissant un signal de synchronisation ($SY_R$), celui-ci est corrigé ($SY_c$) pour tenir compte dudit retard.

5. Procédé selon l'une des revendications 2 à 4, caractérisé par le fait que la création de nouveaux échantillons dans la deuxième zone (II) consiste à multiplier les échantillons incidents autant de fois ($P_E$) que nécessaire pour que la radiale corrigée présente un échantillon corrigé par période d'échantillonnage (Te).

6. Dispositif pour la mise en oeuvre du procédé selon la revendication 5, caractérisé par le fait qu'il comporte :
   - des moyens (2) de mémorisation des échantillons de la récurrence radar ;
   - des moyens (4) de génération d'un signal ($H_E$) d'écriture de ces échantillons dans les moyens de mémorisation (2), ledit signal inhibant l'écriture des échantillons de la première zone (I) ;
   - des moyens (5) de génération d'un signal ($H_L$) de lecture de ces échantillons dans les moyens de mémorisation ce dernier signal assurant une lecture des échantillons de la deuxième zone (II) avec une fréquence sous-multiple de la fréquence d'écriture ($H_E$), le rapport correspondant au facteur de multiplication (P$_E$) des échantillons, et une lecture des échantillons de la troisième zone (III) avec une fréquence égale à la fréquence d'écriture (H$_E$) ;

- des moyens (3) d'émission à la fréquence d'échantillonnage (H$_e$) des échantillons précédemment lus.

**7.** Dispositif selon la revendication 6 caractérisé par le fait qu'il comporte en outre des moyens (6) assurant la mise en parallèle des échantillons avant transmission aux moyens de mémorisation (2), et des moyens (7) de sérialisation des échantillons en sortie des moyens de mémorisation (2).

**8.** Dispositif selon l'une des revendications 6 ou 7, caractérisé par le fait que les moyens (5) de génération du signal (H$_L$) de lecture des échantillons mémorisés comportent une mémoire dite mémoire d'état (52), assurant la mémorisation du facteur de multiplication (P$_E$).

**9.** Dispositif selon la revendication 8, caractérisé par le fait que les moyens (5) de génération du signal (H$_L$) de lecture comportent des moyens de parallélisation de la mémoire d'état (52) par un facteur Q.

**Claims**

**1.** A method for correcting the slant range of the distance measurement obtained by a radar device, the radar device supplying a slant measurement of the distance (D) between its center (C$_R$) and a mobile target (A), the correction consisting in obtaining the projection (D$_S$) of this distance onto a plane passing through the target, the radar supplying a video signal sampled at a constant frequency (He) , the incident samples (E) thus obtained defining a sequence of recurrences (R, R') referred to as incident radar recurrence, a corrected recurrence (R$_c$ R$_c$') being obtained from each incident radar recurrence, the method being characterized in that said corrected recurrence (R$_c$, R$_c$') is obtained by

- suppressing all the incident samples situated in a first zone (I) of the radar recurrence, this zone extending substantially from zero to H samples, in which H is the height of the radar with respect to the plane, expressed by the number of samples,
- time-repositioning the first incident samples situated after the first zone, by creating new samples whose number is equal to the suppressed incident samples, the frequency of the corrected samples (He) , the duration of the corrected recurrence and the number of corrected samples in a corrected recurrence being identical to the corresponding values of the incident radar recurrence.

**2.** A method according to claim 1, characterized in that the time repositioning by creating new samples is made for the incident samples situated in a second zone (II) of the radar recurrence which extends substantially from H to H$^2$ samples, while the incident sample situated in a third zone (III) of the radar recurrence extending substantially from H$^2$ samples to the end of the recurrence are positioned sequentially and at the sampling frequency (He).

**3.** A method according to claim 2, characterized in that the corrected recurrence is delayed with respect to the incident radar recurrence by a duration which is equal to that of the first zone.

**4.** A method according to claim 3, characterized in that, the radar supplying a synchronisation signal (SY$_R$), the latter is corrected (SY$_c$) in order to take the delay into account.

**5.** A method according to one of claims 2 to 4, characterized in that the creation of new samples in the second zone (II) consists in multiplying the incident samples as often (P$_E$) as is necessary to achieve a corrected radial which presents one corrected sample for each sampling period (Te).

**6.** A device for implementing the method according to claim 5, characterized in that it comprises:
- means (2) for storing the samples of the radar recurrence,
- means (4) for generating a write signal (H$_E$) for writing these samples into the storage means (2), said signal inhibiting the writing of the samples of the first zone (I), means (5) for generating a read signal (H$_L$) for reading these samples out of the storage means, this signal ensuring a read-out of the samples of the second zone (II) at a frequency which is a sub-multiple of the write frequency (H$_E$), the ratio corresponding to the sample multiplication factor (P$_E$), and ensuring a read-out of the samples of the third zone (III) at a frequency equal to the write frequency (H$_E$),
- means (3) for transmitting the previously read-out samples which have previously been read-out at the sampling frequency ($H_e$).

7. A device according to claim 6, characterized in that it further comprises means (6) arranging the samples in parallel form prior to transmission to the storage means (2), and means (7) for arranging in series form the samples which have been read out from the storage means (2).

8. A device according to one of claims 6 or 7, characterized in that the means (5) for generating the signal ($H_L$) for reading the stored samples comprise a status memory (52) which stores the multiplication factor ($P_E$).

9. A device according to claim 8, characterized in that the means (5) which generate the read-out signal ($H_L$) comprise means which parallelize the status memory (52) by a factor Q.

**Patentansprüche**

1. Verfahren zur Schrägen-Korrektur der Abstandsmessung eines Radargeräts, wobei das Radargerät eine "schräge" Messung des Abstands (D) zwischen seinem Zentrum ($C_R$) und einem beweglichen Ziel (A) liefert, wobei die Korrektur darin besteht, die Projektion ($D_S$) dieses Abstands auf eine Ebene zu erreichen, die durch das bewegliche Ziel verläuft, und wobei das Radargerät ein mit konstanter Frequenz (He) getastetes Videosignal liefert und die so gebildeten ankommenden Tastproben (E) eine Rekurrenzfolge (R, R') bilden, die als ankommende Radarrekurrenzfolge bezeichnet wird, und wobei eine korrigierte Rekurrenz ($R_c$, $R_{c'}$) ausgehend von jeder ankommenden Radarrekurrenz erhalten wird, dadurch gekennzeichnet, daß die korrigierte Rekurrenz ($R_c$, $R_{c'}$) erhalten wird durch
   - Unterdrückung aller ankommenden Tastproben, die sich in einer ersten Zone (I) der Radarrekurrenz befinden, wobei diese Zone sich im wesentlichen von Null bis H Tastproben erstreckt, wobei H die Höhe des Radargeräts bezüglich der Ebene, in Tastproben ausgedrückt, ist,
   - zeitliches Neupositionieren der ersten, nach der ersten Zone ankommenden Tastproben durch Erzeugung neuer Tastproben in einer Zahl gleich der der unterdrückten ankommenden Tastproben, wobei die Frequenz der korrigierten Tastproben (He), die Dauer der korrigierten Rekurrenz und die Anzahl der korrigierten Tastproben in einer korrigierten Rekurrenz den entsprechenden Werten der ankommenden Radarrekurrenz gleichen.

2. Verfahren nach Anspruch 1, dadurch gekennzeichnet, daß das zeitliche Neupositionieren durch Erzeugung neuer Tastproben für die ankommenden Tastproben erfolgt, die in einer zweiten Zone (II) der Radarrekurrenz liegen, welche sich im wesentlichen von H bis $H^2$ Tastproben erstreckt, während die ankommenden Tastproben, die sich in einer dritten Radarrekurrenzzone (III) befinden, die sich im wesentlichen von $H^2$ Tastproben bis zum Ende der Rekurrenz erstreckt, sequentiell und mit der Tastfrequenz (He) positioniert werden.

3. Verfahren nach Anspruch 2, dadurch gekennzeichnet, daß die korrigierte Rekurrenz bezüglich der ankommenden Radarrekurrenz um eine Dauer gleich der der ersten Zone verzögert ist.

4. Verfahren nach Anspruch 3, dadurch gekennzeichnet, daß das Synchronisationssignal ($SY_R$), das vom Radargerät geliefert wird, korrigiert wird ($SY_c$), um diese Verzögerung zu berücksichtigen.

5. Verfahren nach einem der Ansprüche 2 bis 4, dadurch gekennzeichnet, daß die Erzeugung neuer Tastproben in der zweiten Zone (II) darin besteht, die ankommenden Tastproben so oft zu multiplizieren ($P_E$), wie es notwendig ist, damit der korrigierte Strahl für jede Tastperiode ($T_e$) eine korrigierte Tastprobe aufweist.

6. Vorrichtung zur Durchführung des Verfahrens nach Anspruch 5, dadurch gekennzeichnet, daß sie enthält
   - Mittel (2) zum Speichern der Tastproben der Radarrekurrenz,
   - Mittel (4) zur Erzeugung eines Signals ($H_E$) zum Einschreiben dieser Tastproben in die Speichermittel (2) , wobei dieses Signal das Einschreiben der Tastproben der ersten Zone (I) verhindert,
   - Mittel (5) zur Erzeugung eines Signals ($H_L$) zum Auslesen dieser Tastproben aus den Speichermitteln, wobei dieses Signal ein Auslesen der Tastproben der zweiten Zone (II) mit einer Frequenz bewirkt, die ein Untervielfaches der Schreibfrequenz ($H_E$) ist, wobei das Verhältnis dem Multiplikationsfaktor ($P_E$) der Tastproben entspricht, während dieses Lesesignal das Auslesen der Tastproben der dritten Zone (III) mit einer Frequenz gleich der Schreibgeschwindigkeit (H$_E$) bewirkt,

- Mittel (3) zum Aussenden der vorher gelesenen Tastproben im Rhythmus der Tastfrequenz (H$_e$).

7. Vorrichtung nach Anspruch 6, dadurch gekennzeichnet, daß sie außerdem Mittel (6) aufweist, die die Tastproben vor der Übersendung an die Speichermittel (2) in parallele Form überführen, und Mittel (7), um die Tastproben am Ausgang der Speichermittel (2) wieder in Serienform zu überführen.

8. Vorrichtung nach einem der Ansprüche 6 und 7, dadurch gekennzeichnet, daß die Mittel (5) zur Erzeugung des Signals (H$_L$) zum Lesen der gespeicherten Tastproben einen Zustandsspeicher (52) enthalten, der die Speicherung des Multiplikationsfaktors (P$_E$) bewirkt.

9. Vorrichtung nach Anspruch 8, dadurch gekennzeichnet, daß die Mittel (5) zur Erzeugung des Lesesignals (H$_L$) Mittel aufweisen, um eine Parallelisierung des Zustandsspeichers (52) um einen Faktor Q zu bewirken.

FIG_1

FIG_2

FIG_3-a

FIG_3-b

FIG_3-c

FIG_3-d

$SY_R$

$E$

$R$

$R'$

$O$   $H$   $H^2$   $O$   $H$

ZONE I   ZONE II   ZONE III   ZONE I

$E_C$

$SY_C$

$R_C$

$R'_C$

$O$   $H^2 - H$   $O$

# FIG_4

EP 0 251 855 B1

# FIG_5

EP 0 251 855 B1

# FIG_6

FIG_7-a

FIG_7-b

FIG_7-e

FIG_7-c

FIG_7-d

ZONE I    ZONE II    ZONE III

14

# FIG_8

# FIG_9-a

# FIG_9-b